# EUROPÄISCHE PATENTSCHRIFT

(11) **EP 3 638 560 B1**
(45) Veröffentlichungstag und Bekanntmachung des Hinweises auf die Patenterteilung: **28.10.2020**
(21) Anmeldenummer: 18730750.9
(22) Anmeldetag: 11.06.2018
(51) Int. Cl.: B61B 12/00, B61B 12/06

(54) **SEILBAHN MIT VERRIEGELUNGSÜBERWACHUNG EINES FAHRZEUGS**
CABLE CAR WITH LOCK MONITORING FOR A VEHICLE
TÉLÉPHÉRIQUE À SURVEILLANCE DE VERROUILLAGE D'UN VÉHICULE

(30) Priorität: 12.06.2017 AT 504872017
(43) Veröffentlichungstag der Anmeldung: 22.04.2020
(73) Patentinhaber: Innova Patent GmbH, 6922 Wolfurt (AT)
(72) Erfinder: MOHR, Clemens, 6922 Wolfurt (AT); PFEIFER, Daniel, 6580 Sankt Anton am Arlberg (AT)
(74) Vertreter: Patentanwälte Pinter & Weiss OG
(86) Internationale Anmeldenummer: PCT/EP2018/065269
(87) Internationale Veröffentlichungsnummer: WO 2018/228965

(56) Entgegenhaltungen:
- EP-A1- 0 392 938
- EP-A1- 2 067 682
- EP-A1- 2 155 527
- AT-U1- 7 001

## Beschreibung

Die gegenständliche Erfindung betrifft eine Seilbahn mit einer ersten Station und einer zweiten Station, wobei zwischen der ersten Station und der zweiten Station zumindest ein Fahrzeug bewegt wird, wobei am Fahrzeug eine Verschlusseinrichtung, eine Verrieglungseinheit und eine Verriegelungsüberwachung vorgesehen sind, wobei die Verschlusseinrichtung das Fahrzeug in der ersten Station verschließt, die Verrieglungseinheit die geschlossene Verschlusseinrichtung verriegelt und die Verriegelungsüberwachung den Zustand der Verriegelung überwacht und an einen am Fahrzeug angeordneten Transponder übermittelt, der den Zustand der Verriegelung mit einem Signal an ein in der ersten Station angeordnetes erstes Empfangsgerät übermittelt. Außerdem betrifft die Erfindung ein Verfahren zum Betreiben einer solchen Seilbahn.

Seilbahnen werden oftmals zum Transport von Personen verwendet. Dazu wird eine Anzahl von seilgezogenen Fahrzeugen der Seilbahn zwischen zumindest zwei Stationen bewegt. Typische Seilbahnen sind Luftseilbahnen mit an einem Trag- oder Förderseil in der Luft hängenden Fahrzeugen, wie Gondeln, Kabinen oder Sessel, oder Schienenseilbahnen mit auf Schienen oder anderen Fahrwegen fahrenden, seilgezogenen Fahrzeugen. Fahrzeuge einer Seilbahn umfassen in der Regel Verschlusseinrichtungen, beispielsweise Türen, typischerweise bei Gondeln, Kabinen oder Schienenfahrzeugen, oder Schließbügel, typischerweise bei Sesseln, die verhindern sollen, dass beförderte Personen zwischen den Stationen das Fahrzeug verlassen können. Dazu werden die geschlossenen Verschlusseinrichtungen in den Stationen vor Abfahrt auch verriegelt und die Verriegelung überwacht, um ein unabsichtliches oder missbräuchliches Öffnen der Verschlusseinrichtung zu verhindern. Erst wenn die Verriegelung bestätigt wird, kann das Fahrzeug die Station verlassen. Gängige Verriegelungen sind mechanische Verriegelungen, beispielsweise eine Raste, Falle oder Klinke die bei geschlossener Verschlusseinrichtung einrastet. Der Rastzustand wird dabei ebenfalls oftmals mechanisch geprüft oder abgetastet, beispielsweise mittels eines Rollenhebels. Diese rein mechanischen Lösungen sind jedoch mechanisch aufwendig, sensibel in der Einstellung und können auch zu unbeabsichtigter Fehlbedienung führen. Beispielsweise kann es passieren, dass der Benutzer den Fehler machen kann, dass er die mechanische Einrichtung der Verriegelung einfach zurückstellt, ohne die Türe zu verriegeln.

Es sind daher auch schon elektronische bzw. elektrische Verrieglungsüberwachungen bekannt geworden.

Die EP 2 155 527 B1 beschreibt beispielsweise eine Verrieglungsüberwachung, bei der ein Sensor am Fahrzeug die Lage bzw. den Zustand der Verriegelung erfasst. Der Sensor ist mit einer passiven Transponderantenne (also ohne Spannungsversorgung) am Fahrzeug verbunden. In der Station ist eine Sendeantenne angeordnet, an der die Transponderantenne des Fahrzeugs bei der Ausfahrt aus der Station vorbeifährt. Die Sendeantenne sendet ein Abfragesignal, das induktiv auf die Transponderantenne übertragen wird. Der Zustand der Verriegelung wird als Antwort auf das Abfragesignal von der Transponderantenne auf die Sendeantenne übertragen und ausgewertet. Falls die Verschlusseinrichtung nicht verriegelt ist, wird die Ausfahrt des Fahrzeugs aus der Station verhindert.

Die EP 2 067 682 B1 beschreibt eine Verrieglungsüberwachung bei der am Fahrzeug eine Sende-Empfangseinheit angeordnet ist, die mit der Verriegelung verbunden ist und die den Verriegelungszustand überträgt. Wenn das Fahrzeug in der Station steht, empfängt die Sende-Empfangseinheit am Fahrzeug ein erstes Signal einer stationären Sendeinheit in der Station. Das Fahrzeug übermittelt durch ein mittels der Sende-Empfangseinheit am Fahrzeug gesendetes Signal einen Verriegelungsstatus an eine stationäre Empfangseinheit der Station. Wenn die Verriegelung aktiviert ist fährt das Fahrzeug aus der Station aus und die Sende-Empfangseinheit am Fahrzeug sendet weiterhin den Verriegelungsstatus an die stationäre Empfangseinheit der Station. Damit wird signalisiert, dass die Verschlusseinrichtung bei der Ausfahrt des Fahrzeugs aus der Station verriegelt war. Dazu muss das Fahrzeug aber eine aktive Sendeantenne aufweisen, was eine Stromversorgung der Sendeantenne am Fahrzeug erfordert. Nachdem eine zuverlässige Stromversorgung am Fahrzeug bei Seilbahnen, insbesondere bei Luftseilbahnen, technisch aufwendig (weil Energiespeicher im Fahrzeug untergebracht und mitgeführt werden müssen, die in der Station, im Bahnhof oder während der Fahrt auch geladen werden müssen) und damit nachteilig ist, wird eher danach getrachtet, am Fahrzeug keine Stromversorgung vorzusehen.

Wenn die Verschlusseinrichtung nicht verriegelt ist, muss die Ausfahrt aus der Station aus Sicherheitsgründen verhindert werden. Daher wird bei fehlerhafter Verriegelung dem Bedienpersonal der Seilbahn in der Regel eine Fehlermeldung angezeigt und die Seilbahn gestoppt. Das Bedienpersonal muss dann die Verschlusseinrichtung des vor der Ausfahrt stehenden Fahrzeugs prüfen und nach Prüfen bzw. Beseitigen des Fehlers die Fehlermeldung quittieren. Erst nach dem Quittieren der Fehlermeldung kann die Seilbahn wieder gestartet werden und das Fahrzeug kann aus der Station ausfahren. In der Praxis hat es sich aber gezeigt, dass das Bedienpersonal, insbesondere in Stresssituationen, einen Fehler machen kann und einen derartigen Fehler nur unzureichend prüft, den Fehler nicht behebt oder die Fehlermeldung sogar ohne Prüfung quittiert, was dazu führt, dass das Fahrzeug die Station ohne Verriegelung der Verschlusseinrichtung verlässt. Weder die Verrieglungsüberwachung der EP 2 067 682 B1, noch der EP 2 155 527 B1 kann das verhindern. In der EP 2 067 682 B1 würde man zumindest noch die Information erhalten, dass das Fahrzeug die Station ohne Verriegelung verlassen hat. Irgendwelche Handlungen in diesem Fall werden in der EP 2 067 682 B1 aber nicht erwähnt. Im besten Fall könnte man die Seilbahn stoppen, wenn das Fahrzeug schon die Station verlassen hat.

Es ist daher eine Aufgabe der gegenständlichen Erfindung eine Seilbahn mit Verrieglungsüberwachung, und ein entsprechendes Verfahren, anzugeben, mit dem das Ausfahren eines Fahrzeugs ohne Verriegelung der Verschlusseinrichtung sicher verhindert werden kann.

Diese Aufgabe wird dadurch gelöst, indem in Bewegungsrichtung des Fahrzeugs nach dem ersten Empfangsgerät ein zweites Empfangsgerät vorgesehen ist, und der Transponder des Fahrzeuges nach dem Anfahren des Fahrzeuges in der ersten Station in den Wirkbereich des zweiten Empfangsgerätes gerät und der Transponder ein Signal mit dem Zustand der Verriegelung an das zweite Empfangsgerät sendet, und dass die Seilbahn gestoppt wird, bevor das Fahrzeug aus der ersten Station ausfährt, wenn mit dem Signal an das zweite Empfangsgerät eine fehlerhafte Verriegelung signalisiert wird. Dabei wird die Seilbahn von einer Steuereinheit der Seilbahn gestoppt, die mit dem zweiten Empfangsgerät in Verbindung steht und vom zweiten Empfangsgerät den Zustand der Verriegelung erhält. Auf diese Weise wird sichergestellt, dass das Ausfahren eines Fahrzeugs mit fehlerhafter Verriegelung aus der Station verhindert wird, auch wenn eine erstmalige Fehlermeldung der Verriegelung aus einem Fehler heraus quittiert wurde, was zum Anfahren des Fahrzeugs führt. Durch das Stoppen im Bereich der Station kann die Verriegelung vom Bedienpersonal einfach überprüft werden und/oder es kann das Aussteigen der Passagiere aus dem fehlerhaften Fahrzeug veranlasst werden. Ein gefährlicher Zustand durch ein Fahrzeug ohne Verriegelung auf der Strecke zwischen den beiden Stationen kann damit vermieden werden.

Eine einfache, kostengünstige Implementierung wird auf Basis eines elektromagnetischen Signals (Funk) ermöglicht, indem ein Empfangsgerät mit einer Sendeantenne, die mit einer ersten Auswerteeinheit verbunden ist, ausgeführt wird und der Transponder das Signal an die Sendeantenne sendet, wenn der Transponder ein Abfragesignal der Sendeantenne empfängt. Ganz besonders vorteilhaft ist dabei die Verwendung von kommerziell erhältlicher RFID Technologie.

Wenn dazu noch ein passiver Transponder verwendet wird, der die Energie zum Versenden des Signals aus dem Abfragesignal gewinnt, kann auch auf eine eigene, aufwendige Energieversorgung des Transponders am Fahrzeug verzichtet werden.

Ganz besonders vorteilhaft ist es, wenn das Fahrzeug in der Station im Falle einer fehlerhaften Verriegelung im Wirkbereich des zweiten Empfangsgerätes gestoppt wird. Damit wird gewährleistet, dass das Fahrzeug nicht angefahren werden kann, solange der fehlerhafte Verriegelungszustand anhält. Auf diese Weise lässt sich auf einfache Weise eine sehr hohe Sicherheit erlangen.

Alternativ kann das Fahrzeug im Falle einer fehlerhaften Verriegelung auch in den Wirkbereich des ersten oder des zweiten Empfangsgerätes zurückgefahren werden. Auch damit kann das Ausfahren eines Fahrzeugs mit fehlerhafter Verriegelung sicher verhindert werden.

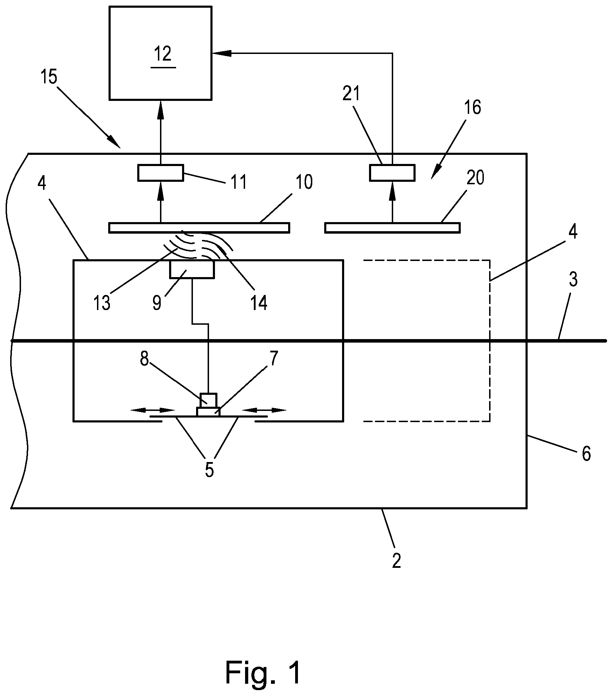

Die gegenständliche Erfindung wird nachfolgend unter Bezugnahme auf die Figur 1 näher erläutert, die beispielhaft, schematisch und nicht einschränkend vorteilhafte Ausgestaltungen der Erfindung zeigen. Dabei zeigt

Fig.1 eine Station einer Seilbahn mit einem Fahrzeug.

In Fig.1 ist eine erste Station 2 einer Seilbahn 1 angedeutet. Das Seil 3 der Seilbahn 1 ist ebenfalls nur angedeutet. Hinlänglich bekannte Einrichtungen der Seilbahn 1 in der Station 2, wie beispielsweise eine Umlenkscheibe für das Seil 3, ein Antrieb oder Spannvorrichtungen für die Umlenkscheibe, usw., und auf der Strecke, wie beispielsweise Stützen mit Tragrollen für das Seil, usw., oder eine zweite Station sind nicht dargestellt, da für die Erfindung nicht relevant. Mit dem Seil 3 wird zumindest ein Fahrzeug 4 zwischen der ersten Station 2 und einer nicht dargestellten zweiten Station befördert. Dazu kann das Fahrzeug 4 mit dem Seil 3 ebenfalls in hinlänglich bekannter Weise fix verbunden sein oder vom Seil 3 mittels federbetätigter Kuppelklemmen abkoppelbar sein. Die Verbindung des Fahrzeugs 4 mit dem Seil 3, beispielsweise in Form eines Laufwerks mit einem Gehänge, ist ebenso bekannt und daher nicht dargestellt. Die Erfindung wird nachfolgend ohne Einschränkung der Allgemeinheit am Beispiel einer Kabine als Fahrzeug 4 und mit Schiebetüren als Verschlusseinrichtung 5 beschrieben.

In der Station 2 wird die Verschlusseinrichtung 5 geöffnet, um das Aus- und Zusteigen von Passagieren zu ermöglichen. Das Fahrzeug 4 kann dazu in der Station 2 stillstehen oder mit niedriger Geschwindigkeit durch die Station 2 bewegt werden. Vor der Ausfahrt 6 der Station 2 wird die Verschlusseinrichtung 5 geschlossen, beispielsweise über eine Mechanik, die durch die Bewegung des Fahrzeugs 4 aktiviert wird. Am Fahrzeug 4 ist eine Verrieglungseinheit 7 vorgesehen, mit der die Verschlusseinrichtung 5 verriegelt wird, sodass ein unabsichtliches oder missbräuchliches Öffnen der Verschlusseinrichtung 5 verhindert wird. Auch die Verriegelung kann mechanisch erfolgen. Ferner ist am Fahrzeug 4 eine Verrieglungsüberwachung 8 vorgesehen, die den Zustand der Verriegelungseinheit 7 erfasst. Die Verrieglungsüberwachung 8 ist vorzugsweise als Sensor, beispielsweise als Endschalter mit Doppelkontakt (Öffner, Schließer), ausgeführt, der den Zustand der Verriegelungseinheit 7 erfasst, also ob die Verriegelung erfolgt ist oder nicht.

Die Verrieglungsüberwachung 8 ist mit einem Transponder 9 am Fahrzeug 4 verbunden, der ein Signal, das Information über den Verriegelungszustand beinhaltet, übermitteln kann. Das vom Transponder 9 übermittelte Signal kann von einem Empfangsgerät 15, das in der Station 2 angeordnet ist, empfangen und ausgewertet werden, um den Verriegelungszustand der Verriegelungseinheit 7 zu erfassen. Das Empfangsgerät 15 ist mit einer Steuereinheit 12 der Seilbahn 1 verbunden und kann den Verriegelungszustand an die Steuereinheit 12 weiterleiten.

In einer bevorzugten Ausgestaltung ist der Transponder 9 als Funktransponder ausgeführt und das Empfangsgerät 15 als erste Sendeantenne 10 mit einer damit verbundenen Auswerteeinheit 11, wobei die Auswerteeinheit 11 mit der Steuereinheit 12 der Seilbahn 1 verbunden ist. Die Sendeantenne 10 ist vorzugsweise eine in Bewegungsrichtung des Fahrzeugs 4 langgestreckte Antenne, um über einen großen Wegbereich des Fahrzeugs 4 ein Signal vom Transponder 9 empfangen zu können. Der Transponder 9 ist vorzugsweise ein passiver Transponder 9 ohne eigene Energieversorgung. In diesem Fall bezieht der Transponder 9 die benötige Energie aus einem Abfragesignal 13, das die Sendeantenne 10 aussendet, wenn sich der Transponder 9 im Wirkbereich der Sendeantenne 10 befindet. Der Transponder 9 kann einen Sensoreingang aufweisen, an den ein externer Sensor als Verrieglungsüberwachung 8 angeschlossen werden kann, um in diesen Fall den Zustand der Verrieglungsüberwachung 8 abzufragen. Im Falle eines Endschalters als Sensor, reicht es aus wenn der Transponder 9 zwei Kontakte lesen kann.

In einer besonders vorteilhaften Ausgestaltung ist der Transponder 9, ein RFID (radiofrequency identification) Transponder (oftmals auch RFID-Tag genannt), vorzugsweise ein passiver RFID-Transponder. Die Auswerteeinheit 11 ist dabei ein RFID-Empfangsgerät, das über die Sendeantenne 10 elektromagnetische Wellen als Abfragesignal 13 aussendet. Der passive RFID-Transponder bezieht aus den empfangenen elektromagnetischen Wellen die elektrische Energie zum Betreiben des RFID-Transponders. Solche RFID-Transponder, auch mit Sensoreingang, sind kommerziell erhältliche Bauteile, ebenso wie das RFID-Empfangsgerät als Auswerteeinheit 11 oder eine RFID-Antenne als Sendeantenne 10.

Die bevorzugt drahtlose Kommunikation zwischen Empfangsgerät 15 und Transponder 9 kann aber natürlich auch auf andere Weise erfolgen, beispielsweise mittels Laser, Infrarot, Ultraschall, usw., wobei der Transponder 9 dann eventuell nicht als passiver Transponder ausgeführt werden kann. Das Empfangsgerät 15 ist dann entsprechend auszuführen, um ein Signal vom Transponder 9 empfangen zu können.

Die Sendeantenne 10, bzw. allgemein das Empfangsgerät 15, ist in dem Bereich der Station 2 angeordnet, in dem die Verschlusseinrichtung 5 des Fahrzeugs 4 geschlossen wird. In diesem Bereich empfängt das Empfangsgerät 15 das Signal vom Transponder 9. Im Falle einer Sendeantenne 10 sendet die Sendeantenne 10 ein Abfragesignal 13 an den Transponder 9, der sich im Wirkbereich der Sendeantenne 10 befindet und der mit einem Signal 14 antwortet, mit dem der Zustand der Verrieglungsüberwachung 8 übermittelt wird. Die Sendeantenne 10 leitet das empfangene Signal 14 an die Auswerteeinheit 11 weiter, die die empfangene Verriegelungsinformation aus dem Signal 14 decodiert und an die Steuereinheit 12 weiterleitet.

Wird die Verriegelung der Verschlusseinrichtung 5 bestätigt, kann das Fahrzeug 4 aus der Station 2 ausfahren. Wird angezeigt, dass die Verriegelung nicht ordnungsgemäß erfolgt ist, wird die Seilbahn 1 gestoppt. Erst wenn diese Fehlermeldung vom Bedienpersonal quittiert wird, kann die Seilbahn 1 wieder gestartet werden und das Fahrzeug 4 aus der Station 2 ausfahren.

Um zu verhindern, dass durch einen Bedienfehler oder einem anderen Fehler das Fahrzeug 4 trotz nicht ordnungsgemäß verriegelter Verschlusseinrichtung 5 aus der Station 2 ausfährt, ist in der Station 2 vor der Ausfahrt 6 und in Bewegungsrichtung des Fahrzeugs 4 nach dem ersten Empfangsgerät 15 ein zweites Empfangsgerät 16 angeordnet. Das zweite Empfangsgerät 16 ist beispielsweise wieder als zweite stationäre Sendeantenne 20 mit einer damit verbundenen zweiten Auswerteeinheit 21 ausgeführt. Das zweite Empfangsgerät 16 ist wiederum mit der Steuereinheit 12 der Seilbahn 1 verbunden. Selbstverständlich könnte auch nur ein Empfangsgerät, oder nur eine Auswerteeinheit für beide Sendeantennen 10, 20, verwendet werden, das dann beide Signale auswertet. Ein Empfangsgerät 15, 16 oder eine Auswerteeinheit 11, 21 könnte dabei auch in der Steuereinheit 12 der Seilbahn 1 integriert sein und muss daher nicht als eigenständiger Bauteil vorhanden sein.

Wenn das Fahrzeug 4 zur Ausfahrt 6 hin beschleunigt, kommt der Transponder 9 am Fahrzeug in den Wirkbereich des zweiten Empfangsgerätes 16, beispielsweise in den Sendebereich der zweiten Sendeantenne 20, das wieder ein Abfragesignal 13 sendet. Der Transponder 9 sendet wieder Signal 14 mit der Verriegelungsinformation der Verrieglungsüberwachung 8, die vom zweiten Empfangsgerät 16 empfangen und an die Steuereinheit 12 weitergeleitet wird. Die empfangene Verriegelungsinformation wird in der Steuereinheit 12 ausgewertet. Wird hier eine nicht ordnungsgemäße Verriegelung der Verrieglungseinheit 7 festgestellt, wird die Seilbahn 1 unverzüglich gestoppt, um ein Ausfahren des Fahrzeugs 4 aus der Station 2 zu verhindern. Dazu ist das zweite Empfangsgerät 16 so in der Station 2 angeordnet, dass das Fahrzeug 4 trotz der bereits erfolgten Beschleunigung noch sicher in der Station 2 angehalten werden kann (angedeutet in Fig.1 durch das strichlierte Fahrzeug 4).

Ganz besonders vorteilhaft ist das zweite Empfangsgerät 16 so angeordnet und ausgeführt, dass das Fahrzeug 4 bei nicht ordnungsgemäßer Verriegelung noch immer im Wirkbereich des zweiten Empfangsgerätes 16 gestoppt wird. Im Falle eines zweiten Empfangsgerätes 16 mit einer zweiten Sendeantenne 20 ist die zweite Sendeantenne 20 dazu vorzugsweise in Bewegungsrichtung des Fahrzeugs 4 langgestreckt, um einen langen Wirkbereich zu erhalten. Da dann das Fahrzeug 4 im Wirkbereich des zweiten Empfangsgerätes 16 steht, kann es nicht zum erneuten Anfahren des Fahrzeugs 4 kommen, solange die Verriegelung nicht ordnungsgemäß erfolgt und gemeldet wurde. Auch wenn ein Bediener der Seilbahn 1 eine Fehlermeldung, die auf eine fehlende Verriegelung zurückgeht, quittieren würde, würde der Fehlerzustand aufrecht bleiben und weiterhin vom zweiten Empfangsgerät 16 erfasst und an die Steuereinheit 12 gesendet werden. Die Steuereinheit 12 verhindert dann weiterhin das erneute Anfahren des Fahrzeugs 4, solange die Verschlusseinrichtung 5 nicht verriegelt ist.

Löst das zweite Empfangsgerät 16 eine Fehlermeldung wegen einer nicht ordnungsgemäßen Verriegelung aus, dann sind vom Bediener vorzugsweise die folgenden Schritte auszuführen:
a) Fehlerzustand beheben, beispielsweise Objekt, welches das Schließen und Verriegeln der Verschlusseinrichtung 5 verhindert hat, entfernen.
b) Verschlusseinrichtung 5 manuell schließen und verriegeln.
c) Fehlermeldung quittieren.
d) Seilbahn 1 wieder anfahren

Da sich das Fahrzeug 4 dabei noch im Wirkbereich des zweiten Empfangsgerätes 16 befindet ist diese einfache Vorgehensweise möglich. Das Fahrzeug 4 ist damit garantiert noch in der Station 2 und Fahrgäste können notfalls noch in der Station 2 aussteigen. Auch wenn das Bedienpersonal einen Fehler macht, kommt es trotzdem nicht zum Anfahren des Fahrzeugs 4.

Auch wenn das Fahrzeug 4 außerhalb des Wirkbereichs des zweiten Empfangsgerätes 16, aber zumindest noch in der Station 2, gestoppt wird, kann ein Ausfahren des Fahrzeugs 4 aus der Station 2 verhindert werden. Hier können nun verschiedene Maßnahmen vorgesehen sein. Beispielsweise kann wieder durch das zweite Empfangsgerät 15 ausgelöst eine Fehlermeldung ausgegeben werden, die vom Bedienpersonal wieder quittiert werden muss, bevor die Seilbahn 1 wieder gestartet wird. Nachdem innerhalb kurzer Zeit eine zweite Fehlermeldung ergeht, kann davon ausgegangen werden, dass das Bedienpersonal nun dem Fehler genauer auf den Grund geht. Es könnte aber auch vorgesehen sein, dass das Fahrzeug 4 wieder in den Bereich des zweiten Empfangsgerätes 16, oder sogar des ersten Empfangsgerätes 15, zurückgefahren werden muss, bevor die Fehlermeldung überhaupt quittiert werden kann. In diesem Fall würde das Fahrzeug 4 beim erneuten Anfahren wieder gestoppt werden, wenn die Verrieglungsüberwachung 8 nach wie vor eine nicht ordnungsgemäße Verriegelung anzeigt. Auch in diesem Fall wäre es unmöglich, dass ein nicht verriegeltes Fahrzeug 4 die Station 2 verlässt.

Wenn der Fehler besteht und nicht behoben werden kann, dann könnte das Fahrzeug 4, das den Fehler auslöst, aus dem laufenden Betrieb ausgeschleust werden, um die Seilbahn 1 ohne dem Fahrzeug 4 wieder in Betrieb nehmen zu können.

Die Empfangsgeräte 15, 16, beispielsweise Sendeantennen 10, 20 mit Auswerteeinheiten 11, 21, und der Transponder 9 am Fahrzeug 4 sind an geeigneten Stellen angeordnet, damit ein Auslesen des Transponders 9 sichergestellt ist. Nachdem der Sendebereich der Sendeantennen 10, 20, aber vorrangig eines Funk Transponders 9, in Normalfall sehr gering ist, müssen die Sendeantennen 10, 20 und der Transponder 9 ausreichend nahe angeordnet sein.

Die beiden Empfangsgeräte 15, 16 sind dabei vorzugsweise so angeordnet, dass sich deren Wirkbereiche nicht überlappen. D.h., dass immer nur eines der beiden Empfangsgeräte 15, 16 das Signal 14 des Transponders 9 empfangen kann.

Die langgestreckten Sendeantennen 10, 20 ermöglichen es auch, mehrere Abfragen des Transponders 9 durchzuführen, um fehlerhafte Kommunikation, beispielsweise durch einen gestörten, drahtlosen Kommunikationskanal, auszuschließen oder zu erkennen.

Die Überprüfung der Verriegelung einer Verschlusseinrichtung 5 eines Fahrzeugs 2 einer Seilbahn 1 erfolgt vorzugsweise in jeder Station 2, in der Passagiere zusteigen können. In einer Station, in der Passagiere nur aussteigen können, ist es nicht unbedingt erforderlich die Verriegelung der Verschlusseinrichtung 5 zu überprüfen, da ein Fahrzeug 2 die Station nur leer verlassen kann und es daher zu keinen gefährlichen Zustand wegen einer nicht ordnungsgemäßen Verriegelung kommen kann. Es kann auch vorgesehen sein, dass die Überprüfung der Verriegelung in einer Station 2 vom Bedienpersonal ein- oder ausgeschaltet werden kann.

Die Kommunikationsstrecke, also Steuereinheit 12, Empfangsgerät 15, 16 (Auswerteeinheit 11, 21), Sendeantenne 10, 20), Transponder 9, kann natürlich auch funktional fehlersicher ausgeführt sein, beispielsweise gemäß einer geforderten Sicherheitsanforderungsstufe (SIL) um eine sichere (im Sinne, dass ein Fehler sofort erkannt wird und das System dann vorzugsweise in einen sicheren Zustand wechselt) Kommunikation im Sinne der funktionalen Sicherheit sicherzustellen. Dazu können hinlänglich bekannte Mechanismen, wie beispielsweise Mehrkanaligkeit in der Hardware, Redundanz in den Daten, Fehlererkennungs- und Fehlerkorrekturmethoden in der Datenübertragung, usw., vorgesehen sein. Folgende Mechanismen könnten implementiert werden:
Beispielsweise könnte jedem Signal 14, oder den darin transportierten Daten, ein Zeitstempel hinzugefügt werden. Wenn die Zeitbasen eines Empfangsgerätes 15, 16 und der Steuereinheit 12 synchronisiert werden, kann eine Abweichung des Zeitstempels zur synchronisierten Steuerungszeit erkannt werden und z.B. eine Abschaltung der Seilbahn 1 zur Folge haben.

Es kann ferner vorgesehen sein, dass von einem Empfangsgerät 15, 16 ab einem bestimmten Zeitpunkt, beispielsweise ab dem Schließen der Verschlusseinrichtung, innerhalb einer vorgegebenen Zeitspanne eine bestimmte Anzahl von Signalen 14 empfangen werden muss und dabei der Inhalt der Signale 14 übereinstimmen muss, um von einer korrekten Übertragung des Zustandes der Verriegelung ausgehen zu können.

Die im Signal 14 übertragenen Daten könnten durch redundante Daten, beispielsweise einen CRC (Cyclic Redundancy Code), abgesichert werden.

Natürlich sind auch noch weitere Maßnahmen zur Sicherstellung der funktionalen Sicherheit denkbar.

## Patentansprüche

1. Verfahren zum Betreiben einer Seilbahn (1) mit zumindest einem Fahrzeug (4), das zwischen einer ersten Station (2) und zweiten Station der Seilbahn (1) bewegt wird, wobei zumindest in der ersten Station (2) eine Verschlusseinrichtung (5) des Fahrzeugs (4) geschlossen wird und die verschlossene Verschlusseinrichtung (5) durch eine Verrieglungseinheit (7) verriegelt wird, wobei der Zustand der Verriegelung von einer Verriegelungsüberwachung (8) erfasst und über einen Transponder (9) am Fahrzeug (4) mit einem Signal (14) an ein in der Station (2) angeordnetes erstes Empfangsgerät (15) übermittelt wird, **dadurch gekennzeichnet, dass** in Bewegungsrichtung des Fahrzeugs (4) nach dem ersten Empfangsgerät (15) ein zweites Empfangsgerät (16) vorgesehen ist, und der Transponder (9) des Fahrzeuges (4) nach dem Anfahren des Fahrzeuges (4) in der ersten Station (2) in den Wirkbereich des zweiten Empfangsgerätes (16) gerät und der Transponder (9) ein Signal (14) mit dem Zustand der Verriegelung an das zweite Empfangsgerät (16) sendet, **und dass** die Seilbahn (1) gestoppt wird, bevor das Fahrzeug (4) aus der ersten Station (2) ausfährt, wenn mit dem Signal (14) an das zweite Empfangsgerät (16) eine fehlerhafte Verriegelung signalisiert wird.

2. Verfahren nach Anspruch 1, **dadurch gekennzeichnet, dass** das erste Empfangsgerät (15) eine erste Sendeantenne (10), die mit einer ersten Auswerteeinheit (11) verbunden ist, verwendet wird und der Transponder (9) das Signal (14) an die erste Sendeantenne (10) sendet, wenn der Transponder (9) ein Abfragesignal (13) der ersten Sendeantenne (10) empfängt.

3. Verfahren nach Anspruch 1 oder 2, **dadurch gekennzeichnet, dass** das zweite Empfangsgerät (16) eine zweite Sendeantenne (20), die mit einer zweiten Auswerteeinheit (21) verbunden ist, verwendet wird und der Transponder (9) das Signal (14) an die zweite Sendeantenne (20) sendet, wenn der Transponder (9) ein Abfragesignal (13) der zweiten Sendeantenne (20) empfängt.

4. Verfahren nach Anspruch 2 oder 3, **dadurch gekennzeichnet, dass** ein passiver Transponder (9) verwendet wird, der die Energie zum Versenden des Signals (14) aus dem Abfragesignal (13) gewinnt.

5. Verfahren nach einem der Ansprüche 1 bis 4, **dadurch gekennzeichnet, dass** das Fahrzeug (4) im Falle einer fehlerhaften Verriegelung im Wirkbereich des zweiten Empfangsgerätes (16) gestoppt wird.

6. Verfahren nach einem der Ansprüche 1 bis 4, **dadurch gekennzeichnet, dass** das Fahrzeug (4) im Falle einer fehlerhaften Verriegelung in den Wirkbereich des ersten Empfangsgerätes (15) oder des zweiten Empfangsgerätes (16) zurückgefahren wird.

7. Seilbahn mit einer ersten Station (2) und einer zweiten Station, wobei zwischen der ersten Station (2) und der zweiten Station zumindest ein Fahrzeug (4) bewegt wird, wobei am Fahrzeug (4) eine Verschlusseinrichtung (5), eine Verrieglungseinheit (7) und eine Verriegelungsüberwachung (8) vorgesehen sind, wobei die Verschlusseinrichtung (5) das Fahrzeug (4) in der ersten Station (2) verschließt, die Verrieglungseinheit (7) die geschlossene Verschlusseinrichtung (5) verriegelt und die Verriegelungsüberwachung (8) den Zustand der Verriegelung überwacht und an einen am Fahrzeug (4) angeordneten Transponder (9) übermittelt, der den Zustand der Verriegelung mit einem Signal (14) an ein in der ersten Station (2) angeordnetes erstes Empfangsgerät (15) übermittelt, **dadurch gekennzeichnet, dass** in der ersten Station (2) in Bewegungsrichtung des Fahrzeugs (4) nach dem ersten Empfangsgerät (15) ein zweites Empfangsgerät (16) angeordnet ist, das ein Signal (14) mit dem Zustand der Verriegelung vom Transponder (9) am Fahrzeug (4) empfängt, wenn der Transponder (9) des Fahrzeugs (4) beim Anfahren des Fahrzeugs (4) in der ersten Station (2) in den Wirkbereich des zweiten Empfangsgerätes (16) gerät, **dass** das zweite Empfangsgerät (16) das empfange Signal (14) auswertet und den Zustand der Verriegelung an eine Steuereinheit (12) der Seilbahn sendet **und dass** die Steuereinheit (12) die Seilbahn (1) stoppt bevor das Fahrzeug (4) aus der ersten Station (2) ausfährt, wenn das Signal (14) eine fehlerhafte Verriegelung signalisiert.

8. Seilbahn nach Anspruch 7, **dadurch gekennzeichnet, dass** das erste Empfangsgerät (15) mit einer ersten Sendeantenne (10), die mit einer ersten Auswerteeinheit (11) verbunden ist, ausgeführt ist und der Transponder (9) das Signal (14) an die erste Sendeantenne (10) sendet, wenn der Transponder (9) ein Abfragesignal (13) der ersten Sendeantenne (10) empfängt.

9. Seilbahn nach Anspruch 7 oder 8, **dadurch gekennzeichnet, dass** das zweite Empfangsgerät (16) mit einer zweiten Sendeantenne (20), die mit einer zweiten Auswerteeinheit (21) verbunden ist, ausgeführt ist und der Transponder (9) das Signal (14) an die zweite Sendeantenne (20) sendet, wenn der Transponder (9) ein Abfragesignal (13) der zweiten Sendeantenne (20) empfängt.

10. Seilbahn nach Anspruch 8 oder 9, **dadurch gekennzeichnet, dass** der Transponder (9) ein passiver Transponder ist, der die Energie zum Versenden des Signals (14) aus dem Abfragesignal (13) gewinnt.

11. Seilbahn nach einem der Ansprüche 8 bis 10, **dadurch gekennzeichnet, dass** der Transponder (9) und die erste Sendeantenne (10) mit der ersten Auswerteeinheit (11) und/oder die zweite Sendeantenne (20) mit der zweiten Auswerteeinheit (21) und auf Basis von RFID Technologie ausgeführt sind.

## Claims

1. Method for operating a cableway (1) with at least one vehicle (4) which is moved between a first station (2) and second station of the cableway (1), wherein at least in the first station, (2) a closure device (5) of the vehicle (4) is closed and the closed closure device (5) is locked by a locking unit (7), wherein the locking state is detected by a locking monitor (8) and transmitted via a transponder (9) on the vehicle (4) with a signal (14) to a first receiving device (15) arranged in the station (2), **characterized in that** a second receiving device (16) is provided in the movement direction of the vehicle (4) after the first receiving device (15), and, after the start of the vehicle (4) in the first station (2), the transponder (9) of the vehicle (4) enters the effective range of the second receiving device (16), and the transponder (9) transmits a signal (14) with the locking state to the second receiving device (16), **and that** the cableway (1) is stopped before the vehicle (4) leaves the first station (2) when the signal (14) to the second receiving device (16) indicates a faulty locking.

2. Method according to claim 1, **characterized in that** as first receiving device (15) a first transmitting antenna (10) is used which is connected to a first evaluation unit (11), and the transponder (9) transmits the signal (14) to the first transmitting antenna (10) when the transponder (9) receives a query signal (13) from the first transmitting antenna (10).

3. Method according to claim 1 or 2, **characterized in that** as second receiving device (16) a second transmitting antenna (20) is used which is connected to a second evaluation unit (21), and the transponder (9) transmits the signal (14) to the second transmitting antenna (20) when the transponder (9) receives a query signal (13) from the second transmitting antenna (20).

4. Method according to claim 2 or 3, **characterized in that** a passive transponder (9) is used which recovers the energy for transmitting the signal (14) from the query signal (13).

5. Method according to one of the claims 1 to 4, **characterized in that,** in case of a faulty locking, the vehicle (4) is stopped in the effective range of the second receiving device (16).

6. Method according to one of the claims 1 to 4, **characterized in that,** in case of a faulty locking, the vehicle (4) is returned to the effective range of the first receiving device (15) or of the second receiving device (16).

7. Cableway having a first station (2) and a second station, wherein at least one vehicle (4) is moved between the first station (2) and the second station, wherein a closure device (5), a locking unit (7), and a locking monitor (8) are provided on the vehicle (4), wherein the closure device (5) closes the vehicle (4) in the first station (2), the locking unit (7) locks the closed closure device (5), and the locking monitor (8) monitors the locking state and transmits said state to a transponder (9) arranged on the vehicle (4), which transponder transmits the locking state with a signal (14) to a first receiving device (15) arranged in the first station (2), **characterized in that** a second receiving device (16) is provided in the first station (2) in the movement direction of the vehicle (4) after the first receiving device (15), said second receiving device (16) receiving a signal (14) with the locking state from the transponder (9) on the vehicle (4) when the transponder (9) of the vehicle (4) enters the effective range of the second receiving device (16) upon the start of the vehicle (4) in the first station (2), that the second receiving device (16) evaluates the received signal (14) and transmits the locking state to a control unit (12) of the cableway, **and that** the control unit (12) stops the cableway (1) before the vehicle (4) leaves the first station (2) when the signal (14) indicates a faulty lock mechanism.

8. Cableway according to claim 7, **characterized in that** the first receiving device (15) is designed to have a first transmitting antenna (10) which is connected to a first evaluation unit (11), and the transponder (9) transmits the signal (14) to the first transmitting antenna (10) when the transponder (9) receives a query signal (13) from the first transmitting antenna (10).

9. Cableway according to claim 7 or 8, **characterized in that** the second receiving device (16) is designed to have a second transmitting antenna (20) which is connected to a second evaluation unit (21), and the transponder (9) transmits the signal (14) to the second transmitting antenna (20) when the transponder (9) receives a query signal (13) from the second transmitting antenna (20).

10. Cableway according to claim 8 or 9, **characterized in that** the transponder (9) is a passive transponder which recovers the energy for transmitting the signal (14) from the query signal (13).

11. Cableway according to one of the claims 8 to 10, **characterized in that** the transponder (9) and the first transmitting antenna (10) with the first evaluation unit (11) and/or the second transmitting antenna (20) with the second evaluation unit (21) are designed on the basis of RFID technology.

## Revendications

1. Procédé de fonctionnement d'un téléphérique (1) comportant au moins un véhicule (4) qui est déplacé entre une première station (2) et une seconde station du téléphérique (1), une installation de fermeture (5) du véhicule (4) étant fermée au moins dans la première station (2) et l'installation de fermeture (5) fermée étant verrouillée par une unité de verrouillage (7), l'état de verrouillage étant détecté par une surveillance de verrouillage (8) et envoyé à un premier appareil de réception (15) disposé dans la station (2) par l'intermédiaire d'un transpondeur (9) sur le véhicule (4) à l'aide d'un signal (14), **caractérisé en ce qu'un** second appareil de réception (16) est prévu après le premier appareil de réception (15) dans le sens de déplacement du véhicule (4) et **en ce que** le transpondeur (9) du véhicule (4) tombe dans la zone de fonctionnement du second appareil de réception (16) après le démarrage du véhicule (4) dans la première station (2), et **en ce que** le transpondeur (9) émet un signal (14) pourvu de l'état de verrouillage vers le second appareil de réception (16), **et en ce que** le téléphérique (1) est arrêté avant que le véhicule (4) ne sorte de la première station (2) si un verrouillage défectueux est signalé à l'aide du signal (14) au second appareil de réception (16).

2. Procédé selon la revendication 1, **caractérisé en ce que** le premier appareil de réception (15) utilise une première antenne d'émission (10) reliée à une première unité d'évaluation (11), et **en ce que** le transpondeur (9) émet le signal (14) vers la première antenne d'émission (10) lorsque le transpondeur (9) reçoit un signal d'interrogation (13) en provenance de la première antenne d'émission (10).

3. Procédé selon la revendication 1 ou 2, **caractérisé en ce que** le second appareil de réception (16) utilise une seconde antenne d'émission (20) reliée à une seconde unité d'évaluation (21), et **en ce que** le transpondeur (9) émet le signal (14) vers la seconde antenne d'émission (20) lorsque le transpondeur (9) reçoit un signal d'interrogation (13) en provenance de la seconde antenne d'émission (20).

4. Procédé selon la revendication 2 ou 3, **caractérisé en ce qu'un** transpondeur passif (9) est utilisé, lequel transpondeur passif extrait l'énergie destinée à l'émission du signal (14) à partir du signal d'interrogation (13).

5. Procédé selon l'une des revendications 1 à 4, **caractérisé en ce que** le véhicule (4) est arrêté dans la zone de fonctionnement du second appareil de réception (16) en cas de verrouillage défectueux.

6. Procédé selon l'une des revendications 1 à 4, **caractérisé en ce que** le véhicule (4) est rétracté dans la zone de fonctionnement du premier appareil de réception (15) ou du second appareil de réception (16) en cas de verrouillage défectueux.

7. Téléphérique comportant une première station (2) et une seconde station, dans lequel au moins un véhicule (4) est déplacé entre la première station (2) et la seconde station, une installation de fermeture (5), une unité de verrouillage (7) et une surveillance de verrouillage (8) étant prévues sur le véhicule (4), l'installation de fermeture (5) fermant le véhicule (4) dans la première station (2), l'unité de verrouillage (7) verrouillant l'installation de verrouillage (5) fermée et la surveillance de verrouillage (8) surveillant l'état de verrouillage et transmettant l'état de verrouillage à un transpondeur (9) disposé sur le véhicule (4), lequel transpondeur transmet l'état de verrouillage à un premier appareil de réception (15) disposé dans la première station (2) à l'aide d'un signal (14), **caractérisé en ce qu'un** second appareil de réception (16) est disposé dans la première station (2) après le premier appareil de réception (15) dans le sens de déplacement du véhicule (4), lequel second appareil de réception reçoit un signal (14) comportant l'état de verrouillage du transpondeur (9) sur le véhicule (4) lorsque le transpondeur (9) du véhicule (4) tombe dans la zone de fonctionnement du second appareil de réception (16) après le démarrage du véhicule (4) dans la première station (2), **en ce que** le second appareil de réception (16) évalue le signal (14) reçu et transmet l'état de verrouillage à une unité de commande (12) du téléphérique **et en ce que** l'unité de commande (12) arrête le téléphérique (1) avant que le véhicule (4) ne sorte de la première station (2) si le signal (14) indique un verrouillage défectueux.

8. Téléphérique selon la revendication 7, **caractérisé en ce que** le premier appareil de réception (15) est doté d'une première antenne d'émission (10) reliée à une première unité d'évaluation (11), et **en ce que** le transpondeur (9) émet le signal (14) vers la première antenne d'émission (10) lorsque le transpondeur (9) reçoit un signal d'interrogation (13) de la première antenne d'émission (10).

9. Téléphérique selon la revendication 7 ou 8, **caractérisé en ce que** le second appareil de réception (16) est doté d'une seconde antenne d'émission (20) reliée à une seconde unité d'évaluation (21), et **en ce que** le transpondeur (9) émet le signal (14) vers la seconde antenne d'émission (20) lorsque le transpondeur (9) reçoit un signal d'interrogation (13) de la seconde antenne d'émission (20).

10. Téléphérique selon la revendication 8 ou 9, **caractérisé en ce que** le transpondeur (9) est un transpondeur passif qui extrait l'énergie destinée à l'émission du signal (14) à partir du signal d'interrogation (13).

11. Téléphérique selon l'une des revendications 8 à 10, **caractérisé en ce que** le transpondeur (9) et la première antenne d'émission (10) sont dotés de la première unité d'évaluation (11) et/ou **en ce que** la seconde antenne d'émission (20) est dotée de la seconde unité d'évaluation (21) et basée sur la technologie RFID.
